# EUROPEAN PATENT APPLICATION

(11) **EP 2 174 773 A1**
(43) Date of publication of application: **14.04.2010**
(21) Application number: 09157888.0
(22) Date of filing: 14.04.2009
(51) Int. Cl.: B29D 35/12, A43B 9/02

(54) **Method for making a shoe**

(30) Priority: 12.09.2008 TW 97135107
(71) Applicant: Chi, Cheng-Hsian, Taichung City (TW)
(72) Inventor: Chi, Cheng-Hsian, Taichung City (TW)
(74) Representative: Collin, Jérôme

(57) **Abstract**

A method for making a shoe (91) includes the steps of: a) preparing a midsole blank (51) including a sole portion (52) and a peripheral flange (53); b) preparing a mold (40) having a sole-forming cavity (45); c) placing the midsole blank (51) in the sole-forming cavity (45); d) heating and pressing the midsole blank (51) to form a midsole (51') having a sole portion (52'), and a stepped peripheral flange (57') having a thick lower peripheral section (53'), a thin upper peripheral section (54'), and a shoulder (55') formed on a surface of the stepped peripheral flange (57') between the thick lower peripheral section (53') and the thin upper peripheral section (54'); e) cooling the mold (40); f) preparing an upper (60) including an open top end (63) and an open bottom end (62); g) placing the open bottom end (62) of the upper (60) around the thin upper peripheral section (54') and abutting the open bottom end (62) against the shoulder (55'); and h) securing the open bottom end (62) of the upper (60) to the stepped peripheral flange (57') of the midsole (51').

## Description

The invention relates to a method for making a shoe, more particularly to a method for making a shoe in a manner of simplifying production procedure, reducing cost, and increasing production efficiency.

Referring to Figures 1 and 2, U. S. Patent Application Publication No. 2003/0066595 discloses a method for making a shoe, which includes the steps of:
a) preparing an upper 11 and a sole unit 12, the upper 11 being prepared by cutting and sewing a substrate having a proper shape, and including a bottom portion 111, a front portion 113 extending upwardly from a front periphery of the bottom portion 111, and a heel portion 112 extending upwardly from a rear periphery of the bottom portion 111, the sole unit 12 including a midsole blank 13 and an outsole 14;
b) fittingly sleeving the upper 11 on a last 21, and clipping the upper 11 on the last 21 with an upper mold part 22 of a mold 23, which additionally includes a bottom mold part 24 and two opposite side mold parts 25;
c) applying an adhesive layer to a top surface of the outsole 14 and a peripheral bottom edge of the upper 11, and placing a thermal-setting adhesive film 15 on a top surface of the midsole blank 13, the peripheral bottom edge of the upper 11 should be coarsened prior to application of the adhesive layer thereon;
d) adhering a peripheral edge 131 of the midsole blank 13 to the upper 11;
e) placing the sole unit 12 and the upper 11 together with the last 21 on the bottom mold part 24 of the mold 23, and closing the mold 23;
f) adhering the midsole blank 13 to the outsole 14 by heating and pressing the mold 23, and at the same time, melting the thermal-setting adhesive film 15 and adhering the upper 11 to the midsole blank 13 while molding the midsole blank 13 into a midsole;
g) cooling the mold 23; and
h) opening the mold 23 and trimming the shoe thus produced to obtain a final shoe product.

The aforesaid method for making a shoe has the following disadvantages:
1. Since the upper 11 includes the bottom portion 111, the front portion 113, and the heel portion 112, the substrate for making the upper 11 is relatively large, and a relatively large amount of waste material would be trimmed from the upper 11 thus produced.
2. Since the peripheral bottom edge of the upper 11 is required to be coarsened prior to applying the adhesive layer thereon, the aforesaid method is relatively complicated and time-wasting.
3. When an additional decorative member (not shown) is to be fastened on the sole unit 12, an additional processing step, such as sewing or adhering, is required.

Therefore, the object of the present invention is to provide a method for making a shoe in order to reduce the amount of waste material that should be trimmed, to increase the production efficiency by simplifying the production procedure, and to reduce the production cost.

Accordingly, the method for making a shoe of this invention includes the steps of:
a) preparing a foamable thermoplastic midsole blank including a sole portion and a peripheral flange extending laterally and upwardly from the sole portion;
b) preparing a mold having a sole-forming cavity;
c) placing the midsole blank in the sole-forming cavity;
d) heating and pressing the midsole blank by heating the mold to a temperature ranging from 110 to 150 °C so as to form a midsole having a sole portion, and a stepped peripheral flange extending laterally and upwardly from the sole portion of the midsole and having a thick lower peripheral section, a thin upper peripheral section, and a shoulder formed on a surface of the stepped peripheral flange between the thick lower peripheral section and the thin upper peripheral section, the volume of the midsole blank being larger than that of the midsole by 5% to 42%;
e) cooling the mold to obtain the midsole;
f) preparing an upper including an open top end and an open bottom end;
g) placing the open bottom end of the upper around the thin upper peripheral section, and abutting the open bottom end against the shoulder; and
h) securing the open bottom end of the upper to the stepped peripheral flange of the midsole.

Other features and advantages of the present invention will become apparent in the following detailed description of the preferred embodiments with reference to the accompanying drawings, of which:

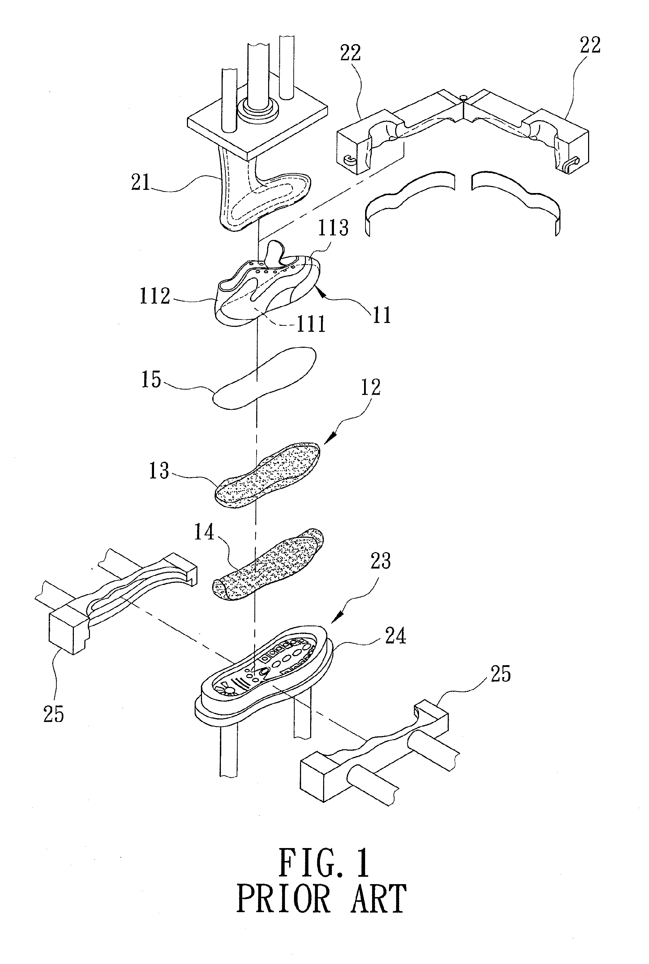

Figure 1 is an exploded perspective view illustrating a conventional method for making a shoe disclosed in U.S. Patent Application Publication No. 2003/0066595;

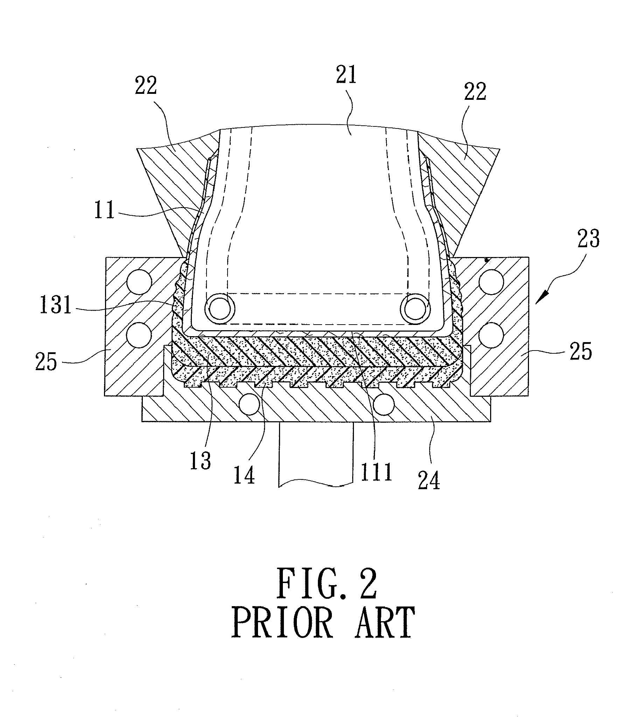

Figure 2 is a sectional view illustrating the conventional method;
Figure 3 is a flow chart of a first preferred embodiment of a method for making a shoe according to this invention;
Figure 4 is a sectional view of a midsole blank used in the first preferred embodiment;
Figure 5 is a perspective view of a mold used in the first preferred embodiment;
Figure 6 is a perspective view of another mold suitable for use in the first preferred embodiment;
Figure 7 is a sectional view illustrating a heating and pressing step of the first preferred embodiment;
Figure 8 is a schematic view of a midsole made by the first preferred embodiment;
Figure 9 is a schematic view of a shoe made by the first preferred embodiment;
Figure 10 is a fragmentary sectional view of the shoe of Figure 9;
Figure 11 is a perspective view of another example of a shoe made by the first preferred embodiment;
Figure 12 is a schematic view of another example of a midsole made by the first preferred embodiment;
Figure 13 is a schematic view of still another example of a shoe made by the first preferred embodiment;
Figure 14 is a schematic view of yet another example of a shoe made by the first preferred embodiment; and
Figure 15 is a fragmentary sectional view of a shoe made by a second preferred embodiment of a method for making a shoe according to this invention.

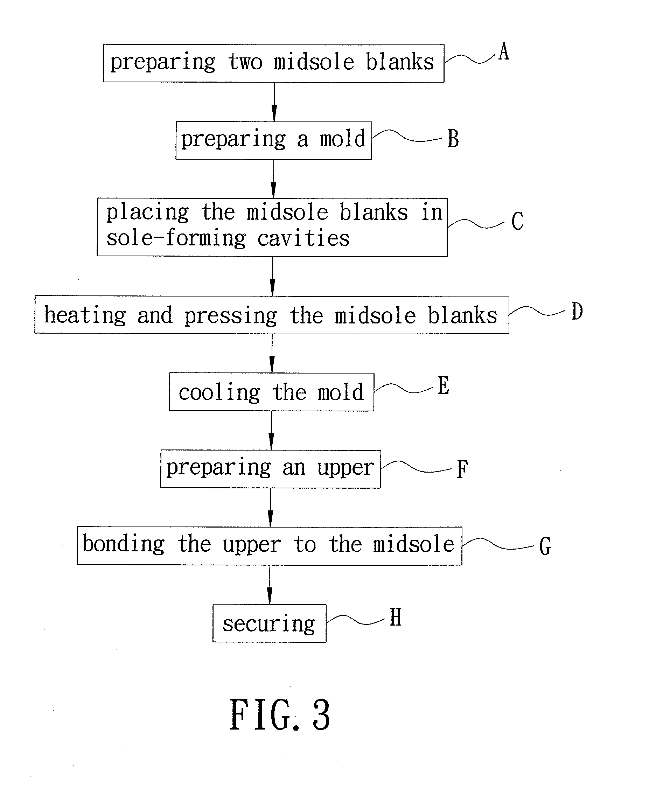

Referring to Figure 3, the first preferred embodiment of the method for making a shoe according to this invention includes the steps of:

### A) preparing two midsole blanks:

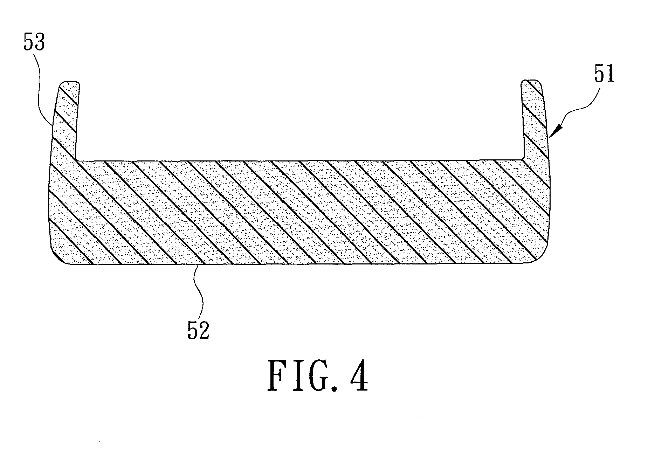

Referring to Figure 4, two midsole blanks 51 (only one is shown) are prepared, each of which includes a sole portion 52 and a peripheral flange 53 extending laterally and upwardly from the sole portion 52. Each of the midsole blanks 51 is a midsole semi-product made by molding a foamable thermoplastic material. Preferably, the foamable thermoplastic material is ethylene vinyl acetate copolymer, polyethylene, thermoplastic rubber, or the like. Furthermore, the sole portion 52 and the peripheral flange 53 may differ in hardness and may be made of different materials.

### B) preparing a mold:

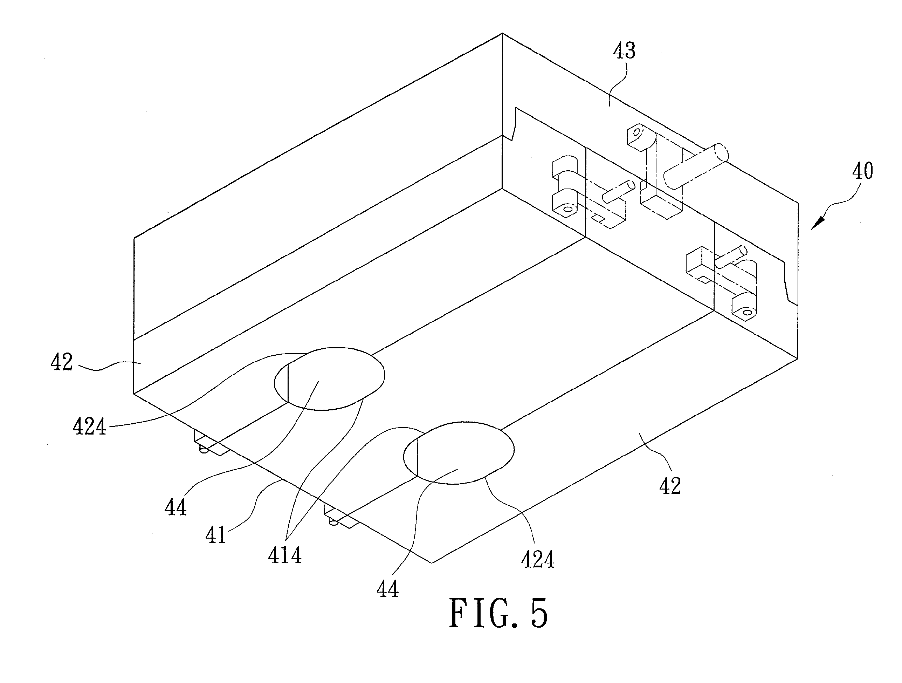

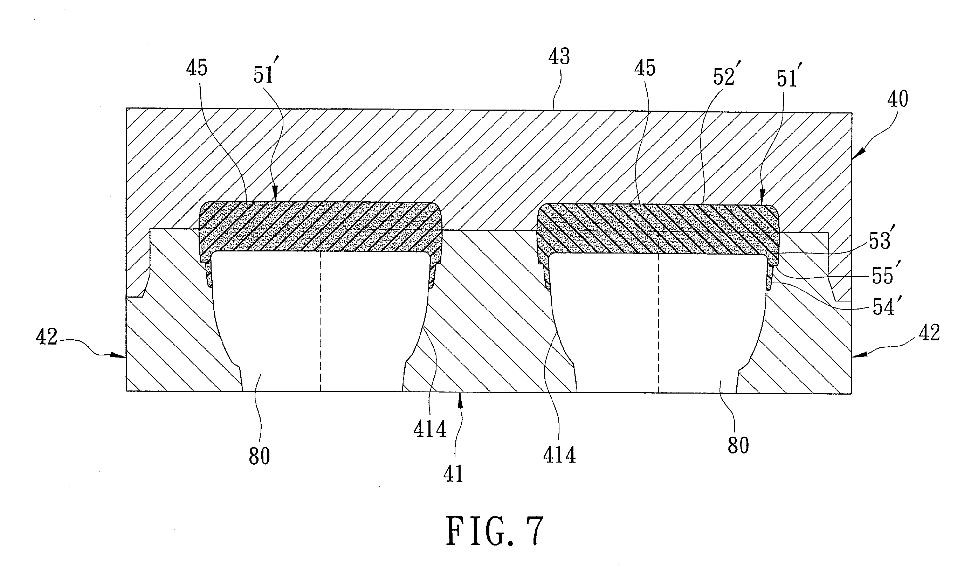

Referring to Figures 5 and 7, a mold 40 is prepared, which includes a first mold part 41, two second mold parts 42, a cover part 43, two last-receiving cavities 44, and two sole-forming cavities 45 cooperating and communicating with the last-receiving cavities 44 correspondingly.

The second mold parts 42 are connected oppositely and pivotally to the first mold part 41 to move leftward or rightward relative to the first mold part 41.

The cover part 43 is connected pivotally to the first mold part 41 so as to move upward or downward. The first mold part 41, the second mold parts 42, and the cover part 43 cooperatively define the last-receiving cavities 44 and the sole-forming cavities 45.

Specifically, each of the last-receiving cavities 44 is composed of a first last-receiving cavity half 414 formed in the first mold part 41 and a corresponding second last-receiving cavity half 424 formed in a corresponding one of the second mold parts 42.

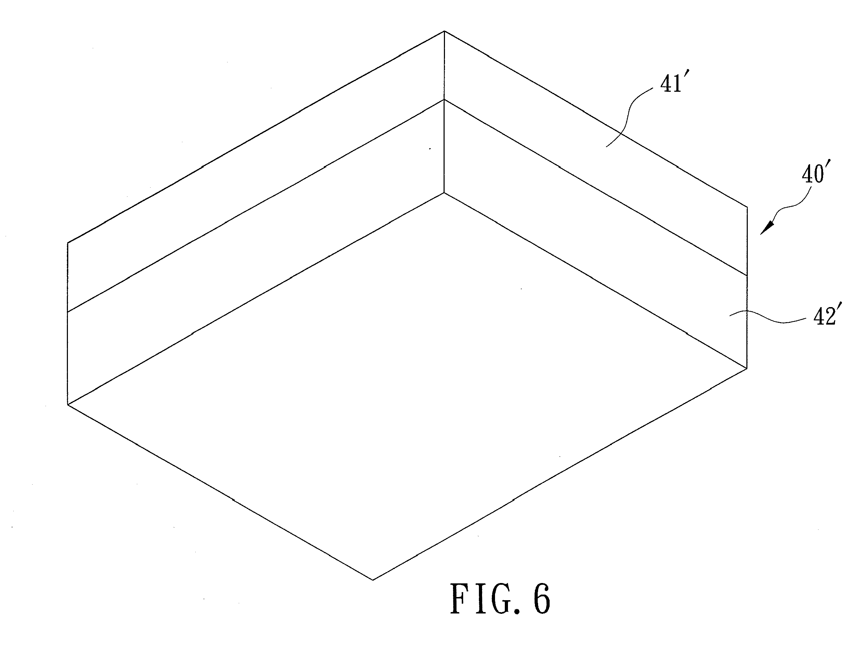

Referring to Figure 6, alternatively, a mold 40' composed of an upper mold part 41' and a lower mold part 42' can be used in the first preferred embodiment.

Additionally, the mold 40 is removably installed on a table (not shown) of a shoe-forming machine. The mold 40 can be processed (such as heating and cooling) on the same table or on different tables.

### C) placing the midsole blanks in the sole-forming cavities:

The midsole blanks 51 are respectively sleeved on two lasts 80, and are then placed in the sole-forming cavities 45 correspondingly.

The mold 40 is closed by moving the second mold parts 42 and the cover part 43 toward the first mold part 41 and by locking the mold 40.

### D) heating and pressing the midsole blanks:

Referring to Figures 7, 8, and 10, the midsole blanks 51 are heated and pressed to form midsoles 51'having predetermined pattern and size. The heating duration preferably ranges from 1 to 7 minutes, and the heating temperature preferably ranges from 110 to 150 °C.

In the preferred embodiment, two of the midsoles 51' are made simultaneously by each molding procedure. Alternatively, one of the midsoles 51 can be made by each molding procedure using a mold having a sole-forming cavity 45.

Each of the midsoles 51' includes a sole portion 52', and a stepped peripheral flange 57' extending laterally and upwardly from the sole portion 52' and having a thick lower peripheral section 53', a thin upper peripheral section 54', and a shoulder 55' formed on an outer surface of the stepped peripheral flange 57' between the thick lower peripheral section 53' and the thin upper peripheral section 54'.

It should be noted that the volume of each of the midsole blanks 51 is larger than that of each of the midsoles 51' by 5% to 42%.

### E) cooling the mold:

The mold 40 is cooled to obtain the midsoles 51'. The heating and cooling steps can be conducted by any manner well known in the art, such as the heating and cooling manners disclosed in the aforesaid prior art.

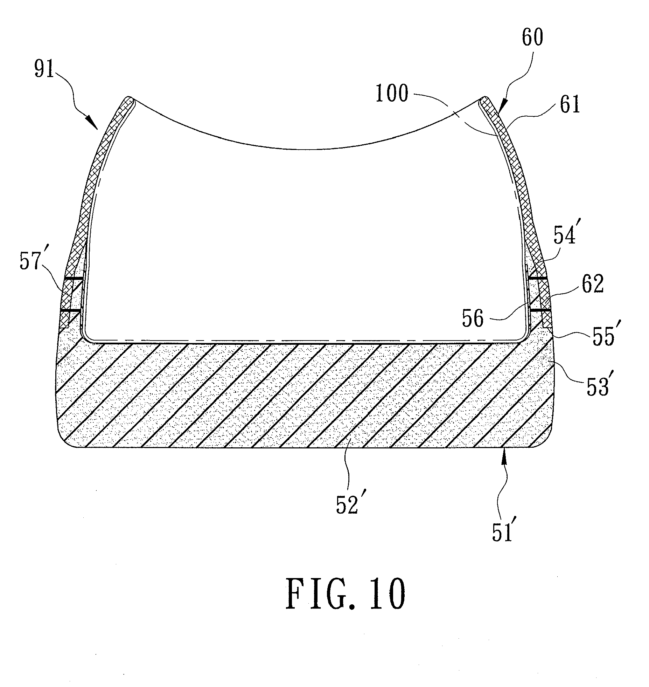

Referring to Figure 10, preferably, a reinforcing member 56 is adhered on an inner surface of the peripheral flange 53 of each of the midsole blanks 51 prior to the step C) so as to enhance the structural strength of the stepped peripheral flange 57' of each of the midsoles 51'. The reinforcing member 56 can be made of a fabric or various plastic films (e.g., a thermoplastic polyurethane film).

Additionally, if necessary, one or more decorative members (not shown) can be disposed on the midsole blanks 51 prior to the step C) so as to provide the midsoles 51' with a decorative effect.

### F) preparing an upper:

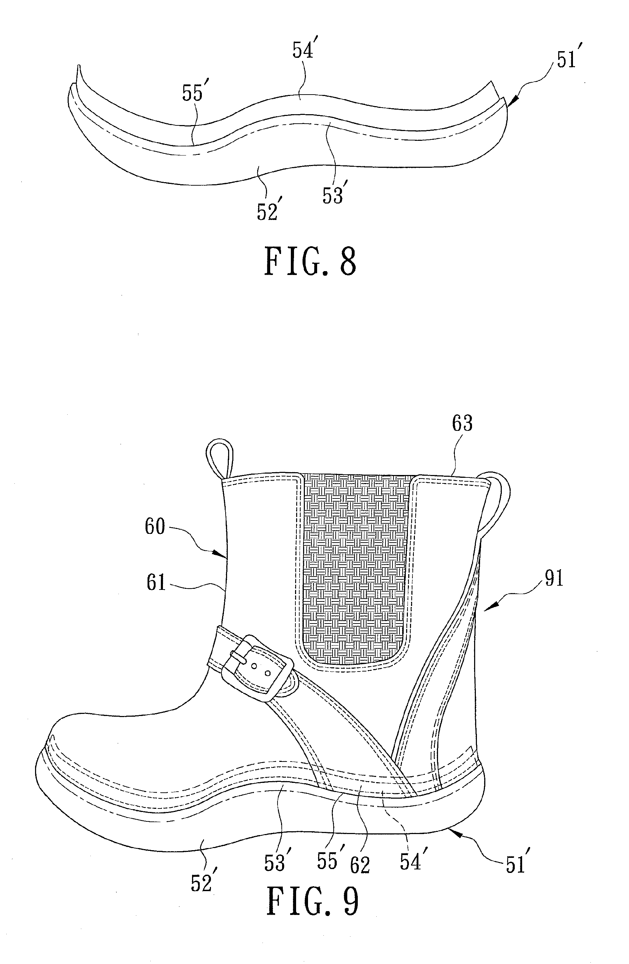

Referring to Figures 9 and 10, an upper 60 is prepared, which includes an open top end 63, an open bottom end 62 corresponding to the thin upper peripheral section 54' of the midsole 51', and a hollow body 61 extending between the open top end 63 and the open bottom end 62. The upper 60 is made of fabric, leather, plastic, etc.

### G) bonding the upper to the midsole:

Referring to Figures 8, 9, and 10, the open bottom end 62 of the upper 60 is placed around the thin upper peripheral section 54' of the midsole 51', such that the open bottom end 62 of the upper 60 abuts against the shoulder 55' of the midsole 51'.

### H) securing:

The open bottom end 62 of the upper 60 is secured to the thin upper peripheral section 54' of the stepped peripheral flange 57' of the midsole 51' by sewing or by adhesive bonding so as to obtain a shoe 91 in a form of a boot.

Specifically referring to Figure 10, preferably, a lining layer 100 is secured to the inner surfaces of the upper 60 and the midsole 51' by sewing or by adhesive bonding so as to enhance comfort when wearing the shoe 91.

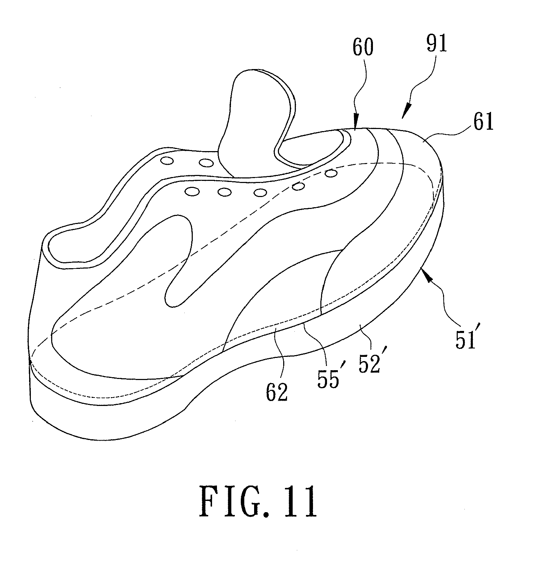

Referring to Figure 11, a shoe 91 in a form of a sport shoe can be made by the method of the present invention.

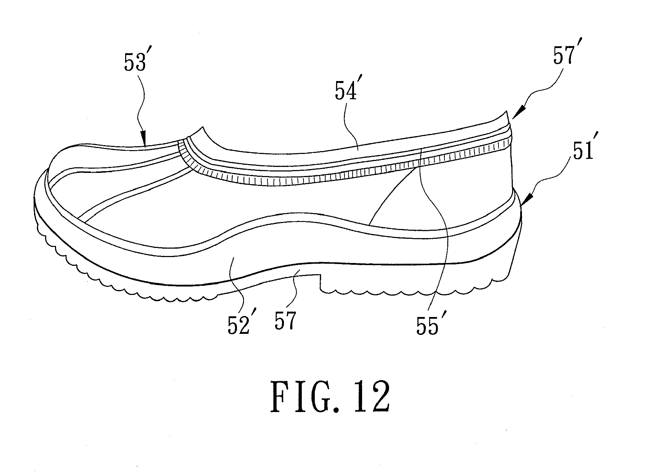

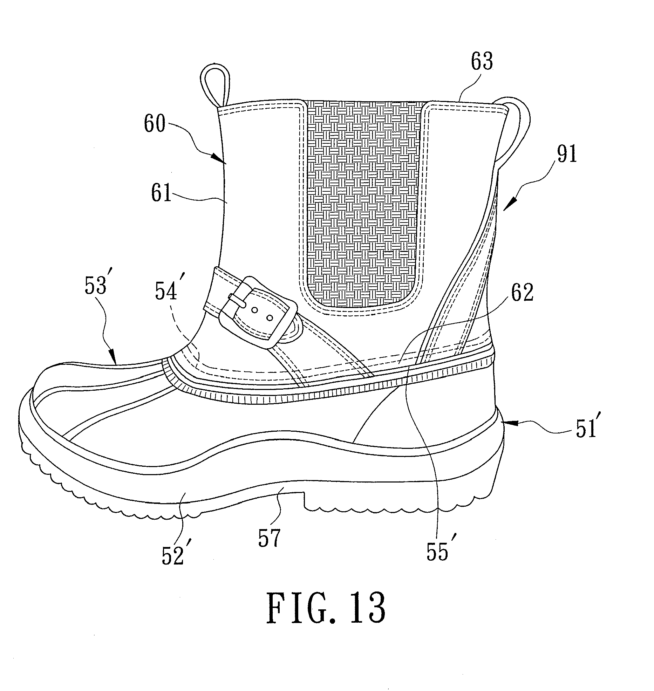

Referring to Figures 12 and 13, a midsole blank in which a peripheral flange of the midsole blank extends around a front part and a heel part of a sole portion can be used to make another form of the midsole 51' in which the thick lower peripheral section 53' of the stepped peripheral flange 57' of the midsole 51' extends around a front part and a heel part of the sole portion 52'.

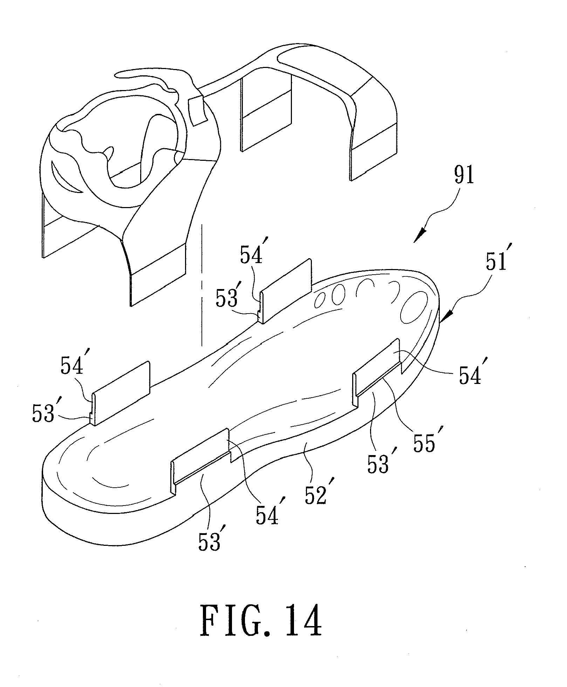

Referring to Figure 14, a shoe 91 in a form of a sandal can likewise be made by the method of the present invention.

Referring to Figures 7, 12 and 13, preferably, an outsole 57 is bonded to the midsole 51' by bonding the outsole 57 to the midsole blank 51 when the midsole blank 51 is heated and pressed in the mold 40 or by bonding the outsole 57 to the midsole 51' directly. When the outsole 57 is to be bonded to the midsole blank 51 while the midsole blank 51 is heated and pressed in the mold 40, the midsole blank 51 is mounted over the last 80, the outsole 57 is placed in the sole-forming cavity 45, an adhesive is provided between the midsole blank 51 and the outsole 57, and the outsole 57 and the midsole blank 51 are pressed and bonded together in the mold 40.

It should be mentioned that, if necessary, the front portion of the outsole 57 can cover the front portion of the midsole 51'.

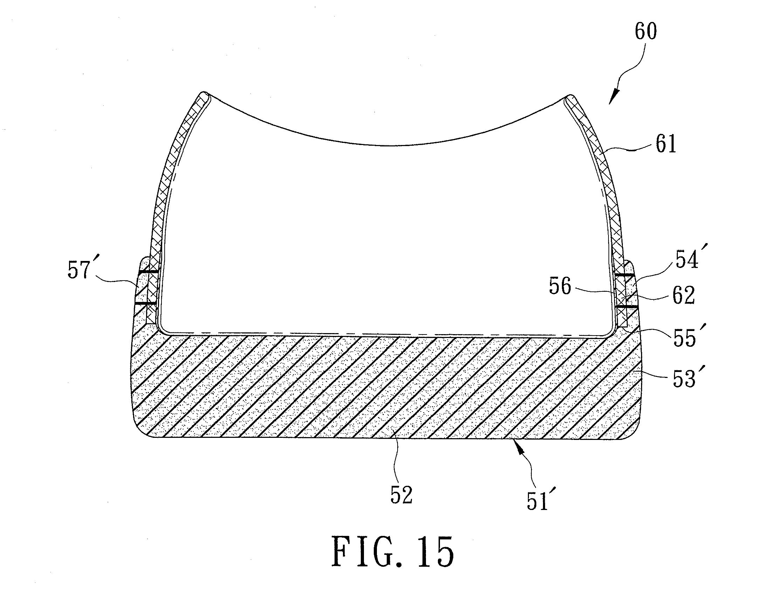

Referring to Figure 15, the second preferred embodiment of the method for making a shoe according to this invention is similar to the first preferred embodiment except that a mold used in the second preferred embodiment is different from that used in the first preferred embodiment so that the shoulder 55' is formed on an inner surface of the stepped peripheral flange 57' between the thick lower peripheral section 53' and the thin upper peripheral section 54'. The open bottom end 62 of the upper 60 is placed around the inner surface of the thin upper peripheral section 54' of the midsole 51', and the open bottom end 62 of the upper 60 abuts against the shoulder 55' of the midsole 51'.

In view of the aforesaid, the method for making a shoe according to this invention has the following advantages:
1. Since the bottom end 62 of the upper 60 is open, the material used for making the upper 60 and the waste produced thereby can be reduced as compared to the prior art in which the upper 11 includes the bottom portion 111.
2. Since the open bottom end 62 of the upper 60 can be secured to the thin upper peripheral section 54' of the stepped peripheral flange 57' of the midsole 51' by sewing, the coarsening processing for the peripheral bottom edge of the upper 11 required in the prior art can be omitted.
3. The waste produced after the securing of the open bottom end 62 of the upper 60 to the thin upper peripheral section 54' of the stepped peripheral flange 57' of the midsole 51' is little, and is thus not necessary to be trimmed. Therefore, the productivity can be improved by the method of the present invention.
4. The decorative member can be fastened onto the midsole blank 51 during the heating and pressing of the midsole blank 51 in the mold 40 so as to provide the midsole 51' with a decorative effect. Therefore, the additional step for fastening the decorative member, such as sewing or adhering, required in the prior art can be omitted.
5. Since the shoulder 55' is formed between the thick lower peripheral section 53' and the thin upper peripheral section 54' of the stepped peripheral flange 57' , the upper 60 can be simply positioned to the midsole 51' by abutting the open bottom end 62 of the upper 60 against the shoulder 55' of the midsole 51' prior to securing the open bottom end 62 of the upper 60 to the thin upper peripheral section 54' of the stepped peripheral flange 57' of the midsole 51'. Therefore, the productivity of the present method is relatively high.

## Claims

1. A method for making a shoe (91), **characterized by** the steps of:
a) preparing a foamable thermoplastic midsole blank (51) including a sole portion (52) and a peripheral flange (53) extending laterally and upwardly from the sole portion (52);
b) preparing a mold (40) having a sole-forming cavity (45);
c) placing the midsole blank (51) in the sole-forming cavity (45);
d) heating and pressing the midsole blank (51) by heating the mold to a temperature ranging from 110 to 150 °C so as to form a midsole (51') having a sole portion (52'), and a stepped peripheral flange (57') extending laterally and upwardly from the sole portion (52') of the midsole (51') and having a thick lower peripheral section (53'), a thin upper peripheral section (54'), and a shoulder (55') formed on a surface of the stepped peripheral flange (57') between the thick lower peripheral section (53') and the thin upper peripheral section (54'), the volume of the midsole blank (51) being larger than that of the midsole (51') by 5% to 42%;
e) cooling the mold (40) to obtain the midsole (51');
f) preparing an upper (60) including an open top end (63) and an open bottom end (62);
g) placing the open bottom end (62) of the upper (60) around the thin upper peripheral section (54'), and abutting the open bottom end (62) against the shoulder (55'); and
h) securing the open bottom end (62) of the upper (60) to the stepped peripheral flange (57') of the midsole (51').

2. The method as claimed in Claim 1, further **characterized by** adhering a reinforcing member (56) on an inner surface of the peripheral flange (53) of the midsole blank (51)prior to the step c).

3. The method as claimed in Claim 1, **characterized in that** the open bottom end (62) of the upper (60) is secured to the thin upper peripheral section (54') of the stepped peripheral flange (57') by sewing.

4. The method as claimed in Claim 1, **characterized in that** the open bottom end (62) of the upper (60) is secured to the thin upper peripheral section (54') of the stepped peripheral flange (57') by adhesive bonding.

5. The method as claimed in Claim 1, further **characterized by** bonding an outsole (57) to the midsole blank (51) when the midsole blank (51) is heated and pressed in the mold (40).

6. The method as claimed in Claim 5, **characterized in that** the mold (40) further has a last (80), the midsole blank (51) is mounted over the last (80), the outsole (57) is placed in the sole-forming cavity (45), an adhesive is provided between the midsole blank (51) and the outsole (57), and the outsole (57) and the midsole blank (51) are pressed and bonded together in the mold (40).

7. The method as claimed in Claim 1, further **characterized by** bonding an outsole (57) to the midsole (51').

8. The method as claimed in Claim 1, **characterized in that** the peripheral flange (53) of the midsole blank (51) extends around a front part and a heel part of the sole portion (52).

9. The method as claimed in Claim 1, **characterized in that** the shoulder (55') is formed on an outer surface of the stepped peripheral flange (57') between the thick lower peripheral section (53') and the thin upper peripheral section (54').

10. The method as claimed in Claim 1, **characterized in that** the shoulder (55') is formed on an inner surface of the stepped peripheral flange (57') between the thick lower peripheral section (53') and the thin upper peripheral section (54').
